**Europäisches Patentamt**

**European Patent Office**

**Office européen des brevets**

(19)

(11) Numéro de publication: **0 136 223 B1**

## (12) FASCICULE DE BREVET EUROPEEN

(45) Date de publication du fascicule du brevet:
**14.09.88**

(51) Int. Cl.⁴: **B 64 D 10/00**

(21) Numéro de dépôt: **84401736.8**

(22) Date de dépôt: **29.08.84**

(54) **Dispositif de protection contre les accélérations.**

(30) Priorité: **31.08.83 FR 8313975**

(43) Date de publication de la demande:
**03.04.85 Bulletin 85/14**

(45) Mention de la délivrance du brevet:
**14.09.88 Bulletin 88/37**

(84) Etats contractants désignés:
**DE GB IT SE**

(56) Documents cités:
**FR - A - 1 520 187**
**FR - A - 1 555 878**
**FR - A - 2 375 873**
**FR - A - 2 395 890**
**FR - A - 2 455 765**

(73) Titulaire: **INTERTECHNIQUE (Société anonyme), Boîte Postale 1, F-78370 Plaisir (FR)**

(72) Inventeur: **Beaussant, Raymond, 4, Cité Pasteur, F-91220 Bretigny (FR)**

(74) Mandataire: **Fort, Jacques et al, CABINET PLASSERAUD 84, rue d'Amsterdam, F-75009 Paris (FR)**

## Description

L'invention concerne les dispositifs de protection des membres de l'équipage d'un aéronef contre l'effet des accélérations élevées qu'ils sont susceptibles de subir au cours d'une mission, pendant un temps bref (lors d'une manœuvre en combat aérien par exemple ou prolongé lors du lancement d'une fusée en vue d'un vol spatial par exemple) et plus particulièrement les dispositifs suivant le préambule de la revendication 1.

Les dispositifs couramment utilisés à l'heure actuelle dans ce but comportent un vêtement, ou au moins un pantalon, muni de poches et un organe de commande qui alimente les poches en gaz comprimé lorsque l'accélération dirigée vers le bas du corps dépasse un seuil déterminé, de façon à éviter la chute de sang dans la partie inférieure du corps au détriment de l'irrigation du cerveau. L'organe de commande le plus fréquemment utilisé, dénommé «valve anti-g», est constitué par un clapet commandé par une masselotte qui commande une admission vers les poches.

Cette solution éprouvée donne des résultats satisfaisants lorsqu'elle met en œuvre un clapet présentant une faible inertie et lorsque le temps de réponse est réduit par prégonflage des poches en altitude (FR-A-2 395 890). On a également utilisé, pour augmenter encore les capacités du dispositif, un système de régulation électrique utilisant comme capteur un accéléromètre, éventuellement bouclé grâce à un signal de réaction représentatif de la pression dans les poches, fourni par une sonde (FR-A-2 455 765).

De façon générale, les dispositifs existants sont conçus pour n'établir une surpression dans les poches qu'en réponse à une accélération dépassant un seuil déterminé, habituellement égal à environ 2 g, et à augmenter ensuite cette surpression suivant une loi linéaire en fonction de l'accélération à partir du seuil.

Ainsi, on évite de mettre en jeu le dispositif anti-g et de consommer du gaz en cas d'accélération faible, correspondant à des manœuvres bien supportées par l'équipage, et on évite la gêne que représente le serrage fréquent des vêtements sur le corps par la mise en surpression des poches.

Une telle solution présente toutefois un inconvénient de principe. L'agression subie par le porteur du vêtement ne sera jamais compensée de façon satisfaisante lorsque l'accélération dépasse le seuil de déclenchement, même lorsque la croissance de la pression n'est pas à pente constante depuis le seuil, mais est représentée par une courbe ayant une première partie à pente forte et une seconde partie à pente plus faible, représentée par un tronçon d'une droite dont l'origine correspond à une accélération plus faible que le seuil (FR-A-1 520 187 correspondant aux caractéristiques selon le préambule de la revendication 1).

L'invention vise notamment à fournir un dispositif répondant mieux que ceux antérieurement connus aux exigences de la pratique en ce qu'il concilie une protection satisfaisante avec un confort, lors des accélérations faibles, identique à celui fourni par les dispositifs existants.

Dans ce but, l'invention propose un dispositif dans lequel ladite loi est sensiblement linéaire depuis une origine correspondant à une accélération négative (c'est-à-dire dirigée vers le cerveau).

Un commutateur peut être prévu pour permettre au porteur du vêtement de passer à volonté de la loi de variation ci-dessus à une loi de variation de la pression qui reste uniforme en dessous du seuil.

Un tel dispositif peut être combiné avec des moyens de prégonflage des poches et/ou de mise en surpression d'alimentation en gaz respiratoire, par exemple du genre décrit dans la demande de brevet FR-A-2 395 890.

Les dispositifs anti-g existants présentent encore un autre défaut de principe. La pression pneumatique établie dans les poches d'un pantalon est uniforme, alors que l'accélération appliquée se traduit par une augmentation hydrostatique de la pression sanguine qui augmente dans le sens d'application de l'accélération (c'est-à-dire en fonction du niveau de l'organe de l'individu). Il en résulte que les dispositifs destinés à permettre aux équipages de supporter les accélérations prévues sur les avions à hautes performances qui entrent en service imposent au personnel des pressions douloureuses et fatigantes pour qu'elles compensent l'accroissement hydrostatique dans les zones basses du corps. Le fait que les poches ne sont pas prévues sur toute la zone du vêtement en contact avec les membres et que les coutures ou plis viennent s'imprimer dans les muscles aggrave encore l'inconfort du personnel. On a proposé de réaliser le poste de pilotage pour placer le pilote en position allongée, afin de réduire la hauteur de la colonne sanguine sur laquelle s'exerce l'accélération lors des ressources ou des virages serrés. Mais cette solution n'apporte que des avantages réduits au prix d'inconvénients graves.

En principe, une solution aux problèmes de la protection contre l'accélération consisterait à immerger l'équipage, l'accélération provoquant une variation de pression hydrostatique externe qui compense à chaque niveau l'effet sur le sang. Effectivement, des essais sur centrifugeuse ont montré une augmentation notable de la tolérance à l'accélération, permettant de tolérer plus de 15 g pendant des durées dépassant plusieurs minutes. Mais la transposition de cette approche sur un engin aérien ou spatial est manifestement irréaliste. De même, il apparaît à première vue que l'utilisation d'un vêtement, ou du moins d'un pantalon comportant des poches soumises à une pression hydrostatique, est à exclure car elle conduirait à embarquer un poids d'eau important, et à renoncer à la pressurisation nécessaire lors des vols à haute altitude impliquant une inhalation de mélange respiratoire sous pression.

L'invention vise également à réaliser un dispositif permettant de conserver tout à la fois les avantages de la protection assurée par une colonne de liquide soumise à l'accélération et de la pressurisation gazeuse, notamment la commodité de commande par une valve anti-g, tout en éliminant dans une large mesure les inconvénients respectifs des deux solutions. Dans ce but, l'invention propose en particulier un dispositif selon la revendication 4.

L'invention sera mieux comprise à la lecture de la description qui suit de modes particuliers d'exécution de l'invention, donnés à titre d'exemples non limitatifs. La description se réfère aux dessins qui l'accompagnent, dans lesquels:

- la Figure 1 est un schéma de principe montrant la constitution d'un pantalon de protection contre les accélérations, couramment dénommé «pantalon anti-g»,
- la Figure 2 est une coupe schématique du pantalon au niveau d'une poche, montrant le développement angulaire de cette dernière;
- la Figure 3 est une représentation de la variation de l'aggression subie par un aviateur pour les différents niveaux du corps, et la compensation réalisée par voie pneumatique à l'aide d'un dispositif anti-g classique;
- la Figure 4 montre la variation de la surpression dans les poches de pantalon obtenue dans le cas d'un dispositif classique et dans le cas d'un dispositif suivant un mode d'exécution de l'invention;
- la Figure 5, similaire à la Figure 3, correspond à la mise en œuvre d'un dispositif suivant l'invention ayant les caractéristiques montrées en Figure 4;
- la Figure 6 est un schéma de principe de la valve anti-g d'un dispositif suivant un mode d'exécution de l'invention;
- la Figure 7, similaire à une fraction de la Figure 6, montre une variante de réalisation;
- la Figure 8 montre le principe de compensation des accélérations par voie hydrostatique;
- la Figure 9, similaire aux Figures 3 et 5, montre le mode d'action d'un second mode d'exécution de l'invention;
- la Figure 10 est un schéma de principe montrant une constitution possible des poches de pantalon pour mettre en œuvre le second mode décrit d'exécution de l'invention.

Avant de décrire l'invention, il faut rappeler quelques indications sur l'agression subie par un pilote sous l'effet de l'accélération et le principe de l'action d'un pantalon anti-g.

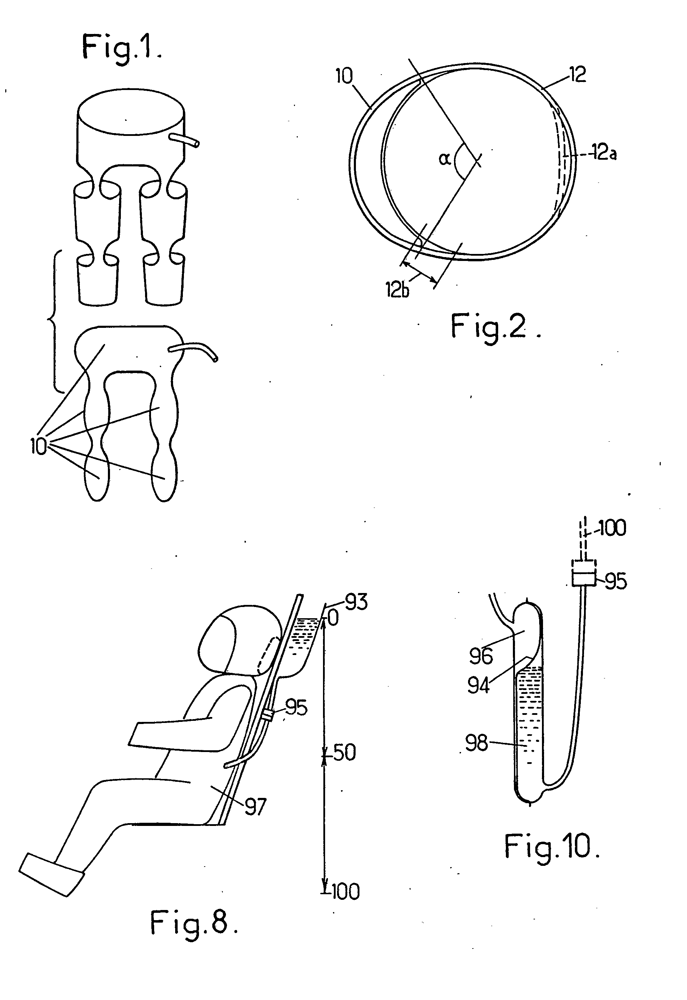

L'accroissement de poussée hydrostatique dans le circuit sanguin causé par une accélération dirigée vers les pieds du pilote provoque un afflux et un stockage du sang dans la partie inférieure du corps par suite de l'élasticité des vaisseaux et, au surplus, la poussée hydrostatique s'oppose à l'irrigation du cerveau par le cœur. Pour un pilote en position assise, la hauteur totale de la colonne sanguine à prendre en compte va du niveau 0 (cerveau) à un niveau situé 1 m environ au-dessous (pies). Si on suppose, ce qui est approximativement exact, que le sang est normalement réparti également entre les moitiés supérieure et inférieure du corps, on constate qu'en compensant l'effet de l'accélération sur la partie inférieure du corps, on ferait disparaître les trois-quart environ de l'excédent sanguin aux dépens de l'irrigation du cerveau. Cette constatation a conduit à adopter le pantalon anti-g du genre montré en Figure 1, muni de poches dans lesquelles une valve permet de créer une pression de gaz. Ces poches sont réparties au niveau des masses musculaires et exercent sur elles une pression lorsqu'elles sont gonflées.

Il est, dans la pratique, très inconfortable de ménager des poches sur toute la circonférence du membre. L'angle occupé par une poche 10 ne dépasse en général guère 130°. L'action des poches s'exerce directement sur ce développement angulaire, par l'intermédiaire de la tension du tissu 12 du pantalon sur le reste du pourtour du membre. Mais l'effet disparaît là où la courbure du tissu devient infinie, comme en 12a sur la Figure 2. Il en est de même dans les zones de raccordement telles que 12b, et en conséquence le rendement inférieur à 1 d'un pantalon anti-g fait que l'action sur le membre n'est pas égale à la pression de gaz qui règne dans les poches.

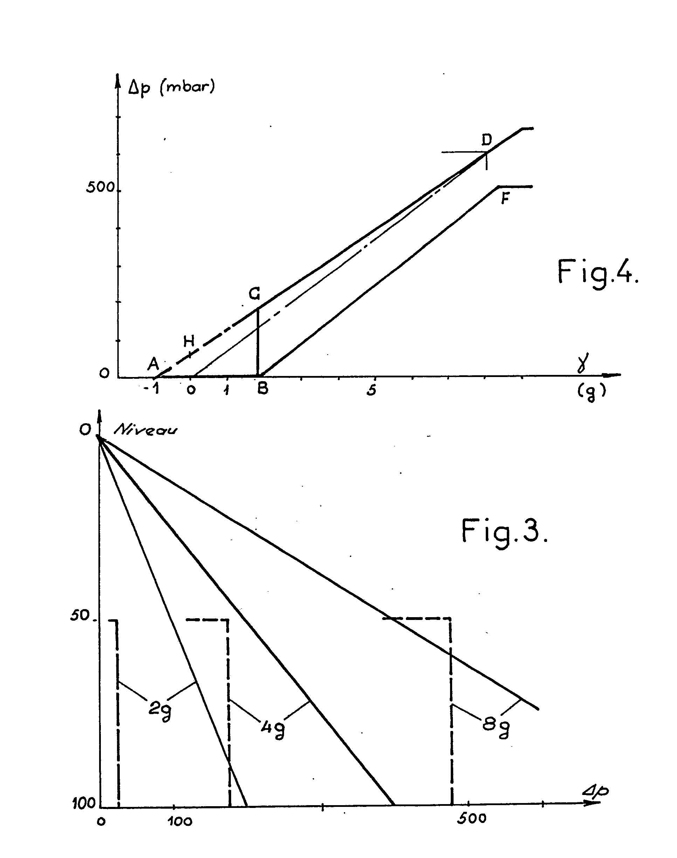

La Figure 3 montre la variation de la pression sanguine, en fonction du niveau, subie par un pilote (lignes en traits pleins) et la pression de gaz qu'on utilise couramment dans un pantalon anti-g pour la compenser (lignes en tirets) pour des accélérations de 2 g, 4 g et 8 g. La loi de variation de la pression en fonction de l'accélération τ est représentée par la ligne BF sur la Figure 4. Jusqu'à 1,8 g, il n'y a aucun gonflage des poches afin d'éviter une mise en action trop fréquente, inutile, source de consommation et de gêne pour le pilote. Au-delà, la surpression Δp dans les poches augmente de façon linéaire jusqu'à un plafond, typiquement légèrement supérieur à 500 mB. La courbe de compensation est ainsi en principe parallèle à la courbe d'agression, représentée en traits mixtes pour le niveau 75 cm sur la Figure 4.

Mais l'examen de la Figure 3 fait immédiatement apparaître:

- une grave insuffisance de la compensation, surtout aux accélérations modérées, insuffisance jugée jusqu'ici inévitable pour éviter une consommation exagérée de gaz, une gêne et des douleurs pour le pilote;
- et, au surplus, le temps de gonflage des poches, jusqu'à la pression de compensation requise, devient inacceptable du fait du retard d'action de la valve anti-g, sauf lorsque sont mis en œuvre des palliatifs, tels que ceux décrits dans le document RF-A-2 395 890 déjà cité et le brevet correspondant US 230 097;
- le défaut d'adaptation de la pressurisation gazeuse des poches, constante sur toute leur surface d'action, à la pression hydrostatique qui augmente vers les pieds.

Pour augmenter la tolérance aux accélérations et diminuer le temps de réponse sans compliquer de façon notable les dispositifs habituels, un premier aspect de l'invention consiste à adopter une loi du genre représenté par la courbe ABCD (Figure 4) sous l'effet d'une accélération croissante.

La surpression Δp dans les poches est maintenue à une valeur nulle jusqu'à un seuil d'accélération, qui peut correspondre à la valeur classique de 1,8 g, bien qu'une valeur supérieure puisse être plus avantageuse dans le cas de l'invention – qui n'est plus tenue à un compromis – puis est modifiée suivant une loi linéaire croissante dont l'origine correspond à une accélération négative et qui rejoint la courbe de compensation complète théorique à 75 cm (courbe en tirets sur la Figure 4) pour une valeur de l'accélération proche du maximum envisagé, pour environ 8 g dans le cas représenté sur la Figure 4.

Le dispositif peut au surplus comporter des moyens à commande manuelle permettant au pilote, notamment en ambiance de combat, de maintenir la variation de la surpression Δp suivant la ligne ACD. Des moyens automatiques peuvent également être prévus pour passer sur la ligne AC en cas de maintien d'une accélération positive inférieure au seuil B pendant une durée supérieure à une valeur déterminée.

Le dispositif sera avantageusement prévu pour que la décroissance de la surpression Δp lors de la diminution de l'accélération jusqu'à une valeur nulle s'effectue suivant CA, ou du moins pour que le retour sur BA ne s'effectue qu'avec une temporisation, qui permet notamment d'éviter tout retard en cas de reprise de l'accélération, les poches étant restées pré-gonflées. La ligne AD étant au-dessus de OD, il y a excès de compensation aux faibles accélérations, ce qui permet de pallier le retard de gonflage des poches. Lors de la phase de croissance de l'accélération, on a ainsi une véritable avance de phase.

Le dispositif suivant l'invention utilisant la nouvelle loi de variation de la pression dans les poches de pantalon est avantageusement prévu pour commander également le gonflage de poches de gilet sous une pression plus faible que les poches de pantalon. Dans ce but, le dispositif peut notamment être combiné à un dispositif d'alimentation en gaz respiratoire de façon à augmenter la pression du mélange respiratoire fourni au pilote lorsque ce dernier est soumis à une accélération et, en même temps, à établir la pression d'alimentation en mélange respiratoire dans les poches de gilet et dans une poche de casque destinée à plaquer le masque respiratoire contre la face du pilote. Le casque muni d'une telle poche peut notamment être du genre décrit dans le document FR-A-2 375 873 et le document correspondant US-A-4 172 455.

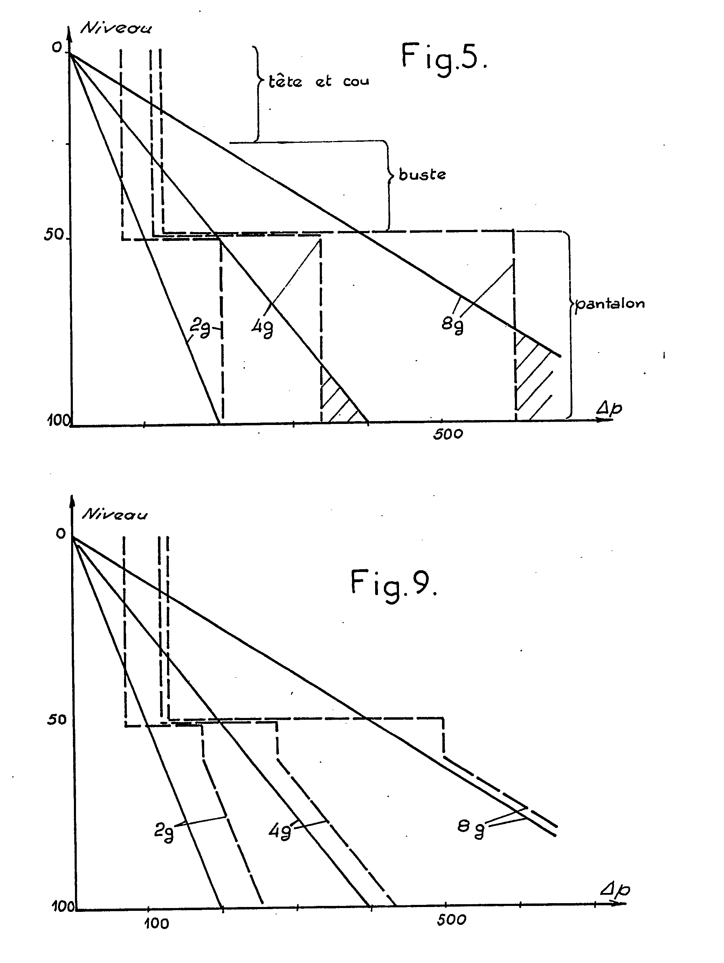

L'amélioration de compensation ainsi obtenue apparaît sur la Figure 5, similaire à la Figure 3, mais correspondant à un exemple de mise en œuvre de l'invention.

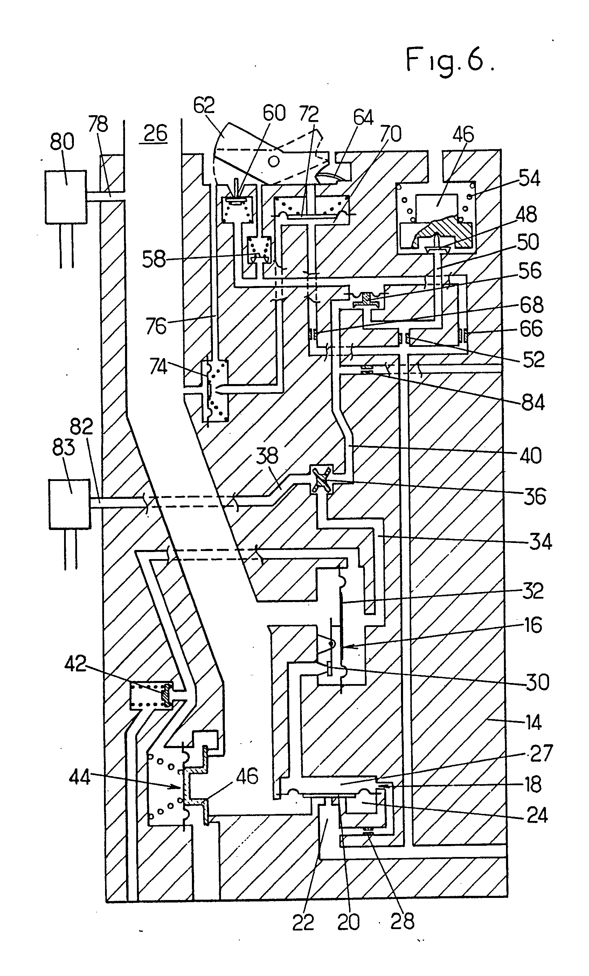

Un dispositif répondant à ces caractéristiques peut être réalisé sous des formes très diverses. La Figure 6 montre un mode d'exécution mettant en œuvre uniquement des moyens mécaniques et pneumatiques. Mais on pourrait tout aussi bien utiliser des éléments de commande de débit de gaz actionnés électriquement et un système de traitement de données fournissant à ces éléments des ordres élaborés à partir de données fournies par des capteurs.

Le dispositif montré en Figure 6 est destiné à réguler la pression dans les poches d'un pantalon anti-g suivant une loi du genre montré an AD en Figure 4. On retrouve dans ce dispositif (Figure 6) une partie commune avec des valves anti-g déjà utilisées. Cette partie ne sera en conséquence que sommairement décrite. Elle comprend, dans un boîtier 14 en plusieurs pièces assemblées, un clapet pilote 16 qui commande un clapet principal 18. Le clapet principal est constitué par une membrane coopérant avec un siège annulaire 20 pour commander le passage d'un gaz (air ou oxygène) d'un passage central d'alimentation 22 à un passage annulaire de sortie 24 débouchant dans un conduit 26 de liaison avec les poches du pantalon. L'ouverture et la fermeture du clapet principal 18 sont commandées par variation de la pression qui s'exerce dans un compartiment 27 délimité par la face de la membrane opposée au siège 20. Le compartiment 27 est relié à l'alimentation par l'intermédiaire d'un calibreur 28 et, par l'intermédiaire de l'organe d'obturation 30 du clapet pilote 16, au conduit 26. Cet organe d'obturation est commandé par une membrane 32 soumise, elle aussi, sur une face à la pression qui règne dans la conduite 26, sur l'autre face, à une pression de commande régnant dans un canal 34 qu'un clapet double 36 permet de relier à celui de deux canaux d'amenée 38 et 40 où règne la pression la plus élevée.

La partie classique du dispositif comprend encore un clapet de sécurité 42 destiné à limiter la pression de commande appliquée à la membrane 32 du clapet pilote 16 et une soupape compensée de vidange 44 constituée d'un obturateur 46 que la pression de commande régnant dans le canal 34 tend à plaquer sur un siège délimitant un passage de communication du conduit 26 avec l'atmosphère.

Le dispositif suivant l'invention montré en Figure 6 comprend, comme beaucoup de dispositifs classiques, une masselotte 46 pouvant coulisser dans un logement du boîtier 14 dans une direction parallèle à celle des accélérations à compenser. Cette masselotte porte un clapet 48 d'obturation du débouché dans le logement d'un canal 50 relié au passage d'alimentation 22 par un calibreur 52. Le logement étant relié à l'atmosphère, la pression qui règne dans le canal 50 varie suivant le degré d'ouverture du clapet 48.

Alors que dans les dispositifs habituels, un ressort est prévu pour ouvrir le clapet lorsque la masselotte n'est soumise qu'à une accélération inférieure à un seuil (1,8 g par exemple), au contraire, dans le dispositif suivant l'invention, le ressort 54 exerce sur la masselotte 46 une force tendant à appliquer le clapet 48 sur son siège. En l'absence d'accélération, la surpression d'équilibre qui s'établit dans le canal 50 est donc déterminée par la précontrainte du ressort 54 (point H sur la Figure 4). La variation de la surpression en fonction de l'accélération sera déterminée par le poids de la masselotte et la section de passage offerte par le calibreur 52. La position du point A est définie par la force de précompression du ressort 54.

Le canal 50 est relié, par l'intermédiaire d'une soupape compensée 56 au canal 40 d'alimentation du clapet double 36. Le conduit d'alimentation 22 est, lui, relié à deux clapets 58 et 60 débouchant dans l'atmosphère de la cabine par l'intermédiaire d'un calibreur 66. Le clapet 58 est taré pour s'ouvrir et provoquer l'ouverture de 56 pour une surpression dans le canal 50 correspondant au seuil C de la Figure 4. Le clapet 60 est à commande manuelle par un basculeur 62 auquel un ressort à lame 64 donne deux positions d'équilibre stable. Dans la position représentée en traits pleins sur la Figure 6, le basculeur 62 libère le clapet 60 qui reste fermé sous l'action de son ressort. Lorsque le basculeur est dans la position montrée en tirets, il maintient ouvert le clapet 60.

Lorsque le clapet 60 est fermé, la soupape compensée 56 est soumise à une pression maintenue par l'intermédiaire du calibreur 66 et fixée par le clapet 58. Lorsque le clapet 60 est ouvert au contraire, la pression appliquée à la soupape compensée 56 est la pression dans la cabine. Dans ce cas, le clapet 56 s'ouvre et la pression régulée qui règne dans le canal 50 est transmise en 40, 34 et agit sur la membrane. Le gicleur 84 présente une section nettement inférieure à celle du gicleur 52 pour ne pas gêner la régulation. Son but est uniquement de vidanger le canal d'amenée 40 lorsque le clapet 56 est refermé.

Le basculeur 62 représenté est prévu pour être commandé soit manuellement, soit automatiquement lorsque l'accélération atteint la valeur correspondant au point B de la Figure 4. Pour cela, le dispositif comporte un branchement supplémentaire sur la conduite d'alimentation, muni d'un calibreur 68 et alimentant une chambre 70 également reliée à l'atmosphère par l'intermédiaire d'un clapet 74 qu'on peut considérer comme un organe de mise en mémoire. La chambre 70 est délimitée par un équipage mobile 72 comprenant un poussoir d'actionnement du basculeur 62 lorsque la pression dans la chambre 70 dépasse le seuil correspondant au segment BC sur la Figure 4. Le clapet de mise en mémoire 74 comprend un obturateur soumis à l'action d'un ressort de réglage de série qui tend à le séparer de son siège pour mettre en communication la chambre 70 avec l'atmosphère de la cabine par un canal 76. L'obturateur du clapet 74, qui fonctionne en tout ou rien, est soumis à la pression qui règne dans la conduite de liaison 26 avec le pantalon dans un sens tendant à l'appliquer sur son siège.

Enfin, le dispositif montré en Figure 8 est prévu pour pouvoir coopérer avec le régulateur d'alimentation en gaz respiratoire. Il comporte pour cela une sortie 78 de la conduite 26 destinée à attaquer, par l'intermédiaire d'un diviseur de pression 80, l'étage de surpression du régulateur de façon à donner une surpression respiratoire fonction croissante de l'accélération au-delà d'un seuil. Et le clapet double 36 est prévu pour recevoir, par l'intermédiaire du canal 38, un ordre de pré-gonflage provenant, éventuellement par l'intermédiaire d'un multiplicateur de pression 83, du régulateur d'alimentation en gaz respiratoire.

Le fonctionnement du dispositif qui vient d'être décrit est le suivant.

Lors d'un vol normal, aussi longtemps que l'accélération ne dépasse pas 1,8 g, la fuite à travers le calibreur 52, dimensionné en fonction du poids de la masselotte 46, de la surface du clapet 46 et de la raideur du ressort 54, génère une surpression suivant la loi AC de la Figure 4. Mais cette surpression n'est pas transmise à la membrane 32 du clapet pilote 16, car la soupape compensée 56 reste fermée et le canal 40 est en permanence relié à l'atmosphère par l'intermédiaire d'un calibreur 84, de section de passage très inférieure à celle du calibreur 52. Le calibreur 66 associé au clapet 58 maintient sur la soupape compensée 56 une surpression de fermeture de la soupape 56.

Pour passer de la loi ABC à la loi AC, il suffit au pilote d'appuyer sur le basculeur 62, ce qui ouvre le clapet 60. La contrepression derrière la soupape 56 disparaissant, cette soupape s'ouvre. La surpression générée dans le canal 50 est transmise à la membrane 32 du clapet pilote 16, la fuite par le calibreur 84 étant beaucoup plus faible que la fuite par le calibreur 52. La surpression s'établit alors suivant la courbe AD jusqu'à ce que le pilote ramène le basculeur dans sa position d'origine.

L'établissement automatique d'une surpression à partir d'un seuil s'effectue automatiquement en réponse à la première accélération qui dépasse ce seuil, de 1,8 g dans le cas illustré. La surpression qui apparaît dans le canal 50 dépasse la pression de blocage générée par le calibreur 66 et le clapet 58 et s'exerçant sur la soupape compensée 56. Cette soupape s'ouvre et le fonctionnement s'établit suivant CD. De plus, lorsque l'accélération dépasse un seuil déterminé par la raideur du ressort agissant sur le détecteur 74 (ce seuil pouvant correspondre à BC ou être différent), le détecteur de pression de mise en mémoire 74 obture la liaison de la chambre 70 avec l'atmosphère. La pression monte dans cette chambre du fait de l'arrivée de gaz par le calibreur 68. L'équipage mobile 72 amène le basculeur 62 dans la position représentée en tirets, ce que l'on peut considérer comme une mise en mémoire automatique de la courbe ACD. Le retour à la courbe ABCD peut s'effectuer soit manuellement (Figure 6), soit par l'intermédiaire d'une temporisation.

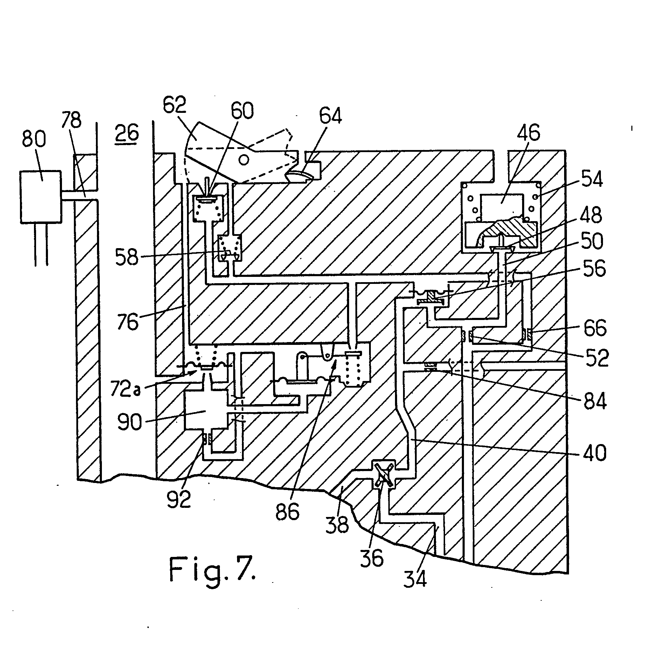

La Figure 7, où les organes correspondant à ceux de la Figure 6 portent le même numéro de référence, montre une telle variante de réalisation. Elle comprend un clapet à membrane 86 qui, lorsqu'il est ouvert, applique la pression atmosphérique provenant du canal 76 aux clapets 56, 58 et 60. Cette membrane est soumise à la pression de commande qui règne dans un compartiment 90 constituant un volume tampon relié par un calibreur 92 au canal 76 et, par une valve de détection de pression 72a, à la conduite 26 d'alimentation des poches. La valve 72a comporte un ressort de rappel qui maintient l'obturateur de la valve sur son siège aussi longtemps que la pression dans les poches reste inférieure à la pression correspondant au point C (200 mbar par exemple). Quant au clapet à membrane 86, il est prévu pour rester fermé aussi longtemps que la pression qui règne dans le compartiment 90, constituant un volume tampon v, reste inférieure à une valeur déterminée, 30 mbar par exemple.

Une telle disposition assure une temporisation avant retour sur la courbe ABC, constituée par le temps mis par le compartiment 90 pour passer d'une pression de 200 mbar à une pression de 30 mbar par exemple (seuil de fonctionnement du clapet à membrane 86) du fait de l'écoulement à travers la fuite 92.

Donc, lorsque l'accélération diminue au-dessous du seuil prévu, 2 g par exemple, la pression dans le passage 26 diminue au-dessous de 200 mbar, et la valve 72a se ferme, isolant le compartiment 90 du passage 26. La pression dans le compartiment diminue alors progressivement et le clapet 86 se ferme dès qu'elle n'atteint plus que 30 mB. L'ouverture du clapet provoque à son tour la fermeture du clapet équilibré 56 et l'isolement du clapet pilote 16. Le volume v du compartiment 90 et l'étranglement 92 sont déterminés pour obtenir la temporisation souhaitée, généralement d'une trentaine de secondes.

La modification d'un dispositif suivant l'art antérieur obtenir une loi du genre montré en Figure 4 représente déjà un gain substantiel sur la protection du pilote. Elle laisse cependant subsister le second problème mentionné plus haut, constitué par l'impossibilité de compenser, à l'aide d'une pression pneumatique constante, l'effet, croissant suivant le niveau, d'une colonne hydrostatique.

Cette seconde difficulté est, dans une large mesure, écartée en associant l'effet d'une pression pneumatique et celui d'une pression hydrostatique. En principe, une compensation parfaite pourrait être obtenue sur la partie inférieure du corps en utilisant la disposition schématisée en Figure 8, comportant un réservoir 93 fixé au siège, relié par deux tronçons de tubulure raccordés par un connecteur auto-obturant 95 aux poches ménagées dans le pantalon de protection du pilote, 97.

Il est toutefois difficile de prévoir un vase d'expansion 93 de volume suffisant, résistant aux accélérations, sur le siège. L'absence d'une valve pneumatique empêche de commander l'établissement d'une pression gazeuse dans le plastron du pilote pour protéger ce dernier. Enfin, la totalité des poches du pantalon doit être remplie d'eau, ainsi que le vase d'expansion, ce qui conduit à embarquer une masse considérable, dépassant la dizaine de kilogrammes. Cette solution, bien que moins avantageuse que celle qui sera maintenant décrite, n'est pas à écarter car elle permet d'obtenir la loi OD de la Figure 4 sans aucun retard.

L'invention écarte ces difficultés en faisant agir tout à la fois une pression pneumatique et une pression hydrostatique. Une première solution consiste pour cela à utiliser des poches séparées par une paroi souple en un compartiment à eau et un compartiment à air. Grâce à une telle disposition, on peut obtenir une loi de variation de la surpression en fonction du niveau qui est du genre montré en Figure 9. Une comparaison avec la Figure 3 montre que la surpression assurée par l'eau dans les poches prédomine sur la pression pneumatique dans toute la partie basse du pantalon et correspond à une compensation complète. Et, du fait de l'emploi d'une valve anti-g pour régler la pression pneumatique, il est possible de piloter également une surpression réduite du mélange respiratoire et d'alimentation des poches d'un plastron pour compléter la protection.

Les poches de pantalon peuvent avoir la constitution représentée schématiquement en Figure 10. Une cloison 94 sépare l'épaisseur de la poche en un compartiment à air 96, relié à la valve anti-g qui peut avoir la constitution montrée en Figure 6, et un compartiment à eau 98. Des moyens pour remplir l'ensemble des compartiments à eau sont représentés schématiquement sur la Figure 10 sous forme d'une conduite commune munie d'un connecteur auto-obturant 92. Les poches peuvent être remplies avant le vol par raccordement à une alimentation 100 qui est ensuite débranchée. La vidange peut être effectuée après un vol par mise en pression complète des poches à gaz. Naturellement, il est possible de ne pas utiliser la compensation hydrostatique, notamment pour des vols où une protection élevée contre les accélérations n'est pas requise.

Les avantages de la solution qui vient d'être décrite apparaissent immédiatement. Le retard de gonflage des poches de pantalon et la consommation de gaz sont réduits. La compensation augmente en même temps que l'accélération, même lorsque celle-ci dépasse le plafond admis pour la surpression gazeuse. Comparée à une solution purement hydrostatique, l'invention réduit la masse d'eau à embarquer à quelques kilogrammes, permet de piloter la surpression dans le plastron et une surpression éventuelle d'une poche de casque (ce qui garantit la tenue du masque sous facteur de charge), et celle du mélange respiratoire.

L'invention est évidemment susceptible de nombreuses variantes. Par exemple, pour tenir compte de la présence d'eau dans les poches de pantalon, ce dernier peut être rendu solidaire du siège. Des poches différentes peuvent être prévues pour l'eau et le gaz. L'invention est susceptible d'être appliquée aussi bien en cas de commande électronique qu'en cas de commande pneumatique et être combinée avec l'enseignement des brevets précédemment cités.

## Revendications

1. Dispositif de protection contre l'effet des accélérations, comportant un vêtement ayant au moins un pantalon muni de poches (10) et un organe de commande qui alimente les poches en gaz comprimé lorsque l'accélération dirigée vers le bas du corps dépasse un seuil déterminé, ledit organe de commande étant prévu pour établir, dans les poches du pantalon, une surpression à partir d'un seul positif d'accélération déterminé, suivant une loi de variation sensiblement linéaire, caractérisé en ce que ladite loi est sensiblement linéaire depuis une origine correspondant à une accélération négative, c'est-à-dire dirigée vers le cerveau.

2. Dispositif selon la revendication 1, caractérisé en ce que le seuil d'accélération est de l'ordre de 1,8 g.

3. Dispositif selon la revendication 1 ou 2, caractérisé en ce que la pente de la loi de variation et la valeur de la surpression immédiatement après dépassement du seuil d'accélération sont choisies pour assurer une compensation sensiblement complète des effets de l'accélération.

4. Dispositif selon la revendication 1, 2 ou 3, caractérisé en ce que certaines au moins desdites poches de pantalon sont séparées par une cloison souple (94) en un compartiment (96) relié audit organe et un compartiment (98) destiné à contenir un liquide, tel que l'eau.

5. Dispositif selon l'une quelconque des revendications précédentes, caractérisé en ce qu'il comprend des moyens de commutation à commande manuelle (62, 60) permettant de mettre en œuvre à volonté la totalité de la loi de variation sensiblement linéaire, y compris au-dessous du seuil.

6. Dispositif selon l'une quelconque des revendications précédentes, caractérisé en ce qu'il comprend des moyens permettant de supprimer la portion de loi sensiblement linéaire croissante inférieure au seuil manuellement et/ou au bout d'une temporisation à partir d'une retombée de l'accélération en dessous du seuil.

7. Dispositif selon l'une quelconque des revendications précédentes, caractérisé en ce qu'il comprend des moyens pour appliquer une surpession, réduite par rapport à celle qui règne dans les poches de pantalon, au mélange respiratoire, dans des poches de plastron et/ou dans une poche de casque destinée à plaquer un masque respiratoire contre la face du porteur.

8. Dispositif selon l'une quelconque des revendications précédentes, caractérisé en ce que l'organe de commande comporte une masselotte (46) associée à un clapet pilote (48) et soumise à l'action de moyens élastiques (54) agissant dans le sens de la fermeture du clapet.

## Claims

1. A device for protection against the effect of acceleration, comprising a garment having at least trousers provided with pockets (10) and a control member which supplies compressed gas to the pockets when the downwardly directed acceleration exerted on the body exceeds a predetermined threshold, said control member being adapted to set up in the trouser pockets an overpressure from a predetermined positive acceleration threshold, in accordance with a substantially linear law of variation, characterized in that said law is substantially linear from an origin corresponding to an acceleration which is negative, i.e. directed toward the brain.

2. A device according to claim 1, characterized in that the acceleration threshold is of about 1.8 g.

3. A device according to claims 1 or 2, characterized in that the slope of the law of variation and the value of the overpressure immediately after the acceleration threshold has been exceeded are selected to ensure a substantially complete compensation of the effects of acceleration.

4. A device according to claim 1, 2 or 3, characterized in that at least some of the trouser pockets are separated by a flexible partition (94) into a compartment (96) connected to said control member and a compartment (98) arranged to contain a liquid, such as water.

5. A device according to any one of the preceding claims, characterized in that it comprises manually controlled switching means (62, 60) enabling the whole of the substantially linear law of variation to be brought into effect, including below the threshold.

6. A device according to any one of the preceding claims, characterized in that it comprises means allowing to suppress the portion of the increasing substantially linear law which is below the threshold, manually and/or after a delay from the instant the acceleration becomes lower than the threshold.

7. A device according to any one of the preceding claims, characterized in that it comprises means for applying an overpressure, reduced as compared with thath in the trouser pockets, to the respiratory mixture in jacket pockets and/or in a helmet pocket adapted to force a respiratory mask against the face of the wearer.

8. A device according to any one of the preceding claims, characterized in that the control member comprises an inertia block (46) associated with a pilot valve (48) and subjected to the action of resilient means (54) biasing the valve toward closure.

## Patentansprüche

1. Schutzvorrichtung gegen die Wirkung von Beschleunigungen mit einem Kleidungsstück mit wenigstens einer mit Taschen (10) versehenen Hose und einem Steuerungsorgan, welches die Taschen mit komprimiertem Gas versorgt, wenn die in Richtung des unteren Teils des Körpers gerichtete Beschleunigung einen vorbestimmten Wert überschreitet, wobei das Steuerungsorgan zur Erzeugung eines Überdruckes in den Taschen der Hose vorgesehen ist, ausgehend von einem vorbestimmten positiven Beschleunigungswert, wobei dieser Überdruck einem genau linearen Variationsgesetz folgt, dadurch gekennzeichnet, dass das lineare Gesetz genau linear von einem Nullpunkt ausgehend ist, welcher einer negativen Beschleunigung, nämlich einer in Richtung des Kopfes gerichteten, entspricht.

2. Vorrichtung nach Anspruch 1, dadurch gekennzeichnet, dass der vorbestimmte Wert der Beschleunigung etwa 1,8 g beträgt.

3. Vorrichtung nach Anspruch 1 oder 2, dadurch gekennzeichnet, dass die Steigung des Variationsgesetzes und der vorbestimmte Wert des Überdruckes unmittelbar nach Überschreiten des Beschleunigungswertes derart gewählt sind, dass ein genau vollständiger Ausgleich der Wirkungen der Beschleunigung gesichert ist.

4. Vorrichtung nach Anspruch 1, 2 oder 3, dadurch gekennzeichnet, dass wenigstens bestimmte Taschen der Hose durch eine biegsame Trennwand (94) in einen mit dem Organ verbundenen Behälter (96) und in einen Behälter (98) zur Aufnahme von Flüssigkeit, wie Wasser, unterteilt sind.

5. Vorrichtung nach Anspruch 1 oder einem der folgenden, dadurch gekennzeichnet, dass diese Umschaltungsmittel mit einer manuellen Steuerung (62, 60) aufweist, welche eine beliebige Verarbeitung einer Gesamtheit des genau linearen Variationsgesetzes einschliesslich des unteren Wertes erlauben.

6. Vorrichtung nach Anspruch 1 oder einem der folgenden, dadurch gekennzeichnet, dass diese Mittel aufweist, welche die manuelle Unterdrükkung des steigenden, unteren Bereichs des genau linearen Gesetzes mit einem Wert und/oder am Ende einer Verzögerung den Start des Anfangs der Beschleunigung vom unteren Wert aus erlauben.

7. Vorrichtung nach Anspruch 1 oder einem der folgenden, dadurch gekennzeichnet, dass diese Mittel zur Erzeugung eines Überdruckes, welcher im Verhältnis zu dem Druck, der in den Taschen der Hose herrscht, geringer ist, mit einem Beatmungsmittel in den Brusttaschen oder in einer Schutzhelmtasche zum Andrücken einer Atemmaske gegen das Gesicht eines Trägers aufweist.

8. Vorrichtung nach Anspruch 1 oder einem der folgenden, dadurch gekennzeichnet, dass das Steuerungsorgan einen Kopf (46) aufweist, welcher mit einer Führungsklappe (48) verbunden und einer Einwirkung eines elastischen Mittels (54) unterzogen ist, welches im Sinne eines Schliessens der Klappe arbeitet.

# Fig.1.

# Fig.2.

# Fig.8.

# Fig.10.

Fig.4.

Fig.3.

0 136 223

Fig.5.

tête et cou

buste

2g 4g 8g

pantalon

Niveau

500

Δp

Fig.9.

Niveau

2g 4g 8g

100 500

Δp

13

Fig.6.

Fig. 7.